(19) Europäisches Patentamt / European Patent Office / Office européen des brevets

(11) **EP 3 221 780 B1**

(12) **FASCICULE DE BREVET EUROPEEN**

(45) Date de publication et mention de la délivrance du brevet:
**17.08.2022   Bulletin 2022/33**

(21) Numéro de dépôt: **15804901.5**

(22) Date de dépôt: **19.11.2015**

(51) Classification Internationale des Brevets (IPC):
**G06F 3/0488** *(2022.01)*   **G06F 1/16** *(2006.01)*
**G06F 3/04812** *(2022.01)*   **G06F 3/041** *(2006.01)*
**B60K 35/00** *(2006.01)*   **B60K 37/06** *(2006.01)*

(52) Classification Coopérative des Brevets (CPC):
**G06F 3/0488; B60K 37/06; G06F 3/041661;
G06F 3/0418; G06F 3/04812;** B60K 2370/1438

(86) Numéro de dépôt international:
**PCT/FR2015/053125**

(87) Numéro de publication internationale:
**WO 2016/079432 (26.05.2016 Gazette 2016/21)**

(54) **INTERFACE GRAPHIQUE ET PROCEDE DE GESTION DE L'INTERFACE GRAPHIQUE LORS DE LA SELECTION TACTILE D'UN ELEMENT AFFICHE**

GRAFISCHE SCHNITTSTELLE UND VERFAHREN ZUR VERWALTUNG DER BESAGTEN GRAFISCHEN SCHNITTSTELLE WÄHREN DER BERÜHRUNGSAUSWAHL EINES ANGEZEIGTEN ELEMENTS

GRAPHICAL INTERFACE AND METHOD FOR MANAGING SAID GRAPHICAL INTERFACE DURING THE TOUCH-SELECTION OF A DISPLAYED ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2014   FR 1461287**

(43) Date de publication de la demande:
**27.09.2017   Bulletin 2017/39**

(73) Titulaire: **Renault s.a.s
92100 Boulogne Billancourt (FR)**

(72) Inventeur: **REGNIER, Stéphane
91370 Verrieres Le Buisson (FR)**

(74) Mandataire: **Renault Group
Renault s.a.s.
API : TCR GRA 2 36
1, Avenue du Golf
78084 Guyancourt Cedex (FR)**

(56) Documents cités:
**EP-A2- 2 105 826       FR-A1- 3 002 052
US-A1- 2009 201 246    US-A1- 2011 157 040
US-A1- 2011 285 665    US-A1- 2012 120 002
US-A1- 2014 028 557**

**Description**

L'invention a pour objet les interfaces tactiles, notamment les interfaces tactiles embarquées à bord de véhicules automobiles, ou les interfaces tactiles servant à piloter des systèmes sur lesquels un utilisateur intervient tout en étant contraint de maintenir son attention focalisée sur d'autres tâches, par exemple sur la surveillance d'une machine de production.

Dans de telles configurations, l'utilisateur doit interagir avec l'interface tactile tout en gardant son attention majoritairement disponible pour d'autres tâches que l'actionnement de l'interface, et, si l'interface n'est pas très grande, l'utilisateur peut éprouver des difficultés à sélectionner l'élément d'un menu. Pour sélectionner un tel élément d'un menu, il doit appliquer son doigt à un endroit donné de l'interface correspondant à une zone de sélection tactile de l'élément de menu, mise en évidence sur l'écran par une icône ou plus généralement un symbole graphique affiché sur l'écran sensiblement à l'endroit de la zone de sélection tactile. En particulier, dans un véhicule automobile, lorsque le véhicule est en mouvement les gestes de sélection de l'utilisateur, qui doit constamment surveiller la route, peuvent être imprécis.

Afin de pallier ces inconvénients, certains fabricants de terminaux mobiles ont développé des écrans de grande taille ou des systèmes de saisie de texte, dans lesquels par exemple on grossit graphiquement une lettre touchée par le doigt. Cet affichage grossi, déporté à distance de l'endroit où se trouvent alors l'icône à activer et le doigt, est maintenu pendant une brève durée de temps, suffisamment longue cependant pour que l'utilisateur lise la lettre qu'il a saisie, effectuant ainsi un contrôle visuel pour vérifier qu'il a effectué la saisie qu'il souhaitait. Ce type d'affichage impose toujours d'effectuer la saisie sur une zone restreinte et différente de l'écran à chaque nouvelle lettre. Le document US2009201246 A1 décrit une méthode d'ajustement d'un écran d'affichage d'un dispositif électronique, destinée à faciliter la vue et la sélection d'icônes de l'écran lorsque le dispositif subit des instabilités telles que des vibrations. Le document US2011157040 A1 décrit un dispositif d'affichage comprenant un écran tactile apte à détecter l'approche d'un objet et présumer la région de l'écran qui est susceptible d'être touchée, de manière à pouvoir magnifier les icônes situées dans cette région et à afficher en rouge les parties de cette région. Le document US 2012120002 A1 décrit un dispositif à écran tactile capable de déterminer la trajectoire d'un objet, et de déterminer un point cible correspondant à un point de contact entre la trajectoire de l'objet et l'écran, l'interface étant configurée pour effectuer une action au niveau de ce point, telle que le déplacement d'un curseur. Les documents US20112 /285665 A1, FR 3002052 A1, EP2105826 A2 et US2014028557 A1 constituent d'autres arts antérieurs pertinents.

L'invention a pour but de proposer un système d'interface homme/machine permettant de diminuer les occurrences d'erreur de saisie des éléments d'un menu, en facilitant la saisie de l'élément graphique souhaitée par l'utilisateur, sans nécessairement augmenter la taille de l'écran, et en laissant davantage de marge dans les gestes à effectuer pour effectuer la saisie.

La revendication 1 définit l'interface tactile de l'invention et la revendication 10 le procédé correspondant.

On désigne ici par « écran » de l'interface tactile, ou interface graphique, trois régions d'espace à deux dimensions qui sont superposables les unes aux autres, moyennant un éventuel calcul de changement de coordonnées géré par une unité de commande électronique gérant les opérations de détection effectuées par l'interface tactile ainsi que les affichages sur l'écran de l'interface tactile.

La première de ces trois régions est constituée par l'écran d'affichage à proprement parler permettant d'afficher les éléments graphiques à l'attention de l'utilisateur pour lui indiquer les régions de l'espace avec lesquelles il doit interagir.

La deuxième région est une unité de détection de l'interface tactile ou interface graphique, associée à une surface plane sensible de type écran tactile, superposée à l'écran d'affichage, ou associée à un autre système de détection dans l'espace permettant notamment de détecter la position du doigt de l'utilisateur au voisinage de l'écran d'affichage, alors repéré dans les coordonnées propres de l'interface de détection.

La troisième région est définie par des valeurs de coordonnées de points d'un écran virtuel de référence, mémorisées par l'unité de commande électronique et groupées par régions de l'écran virtuel, exprimées dans un système de coordonnées propre à l'unité de commande électronique. Ces régions de l'écran virtuel sont par exemple définies par des zones surfaciques ou par des ensembles de lignes frontières. Par rapport à ces régions, sont mémorisés les points d'ancrage initiaux des éléments graphiques, puis calculés leurs points de centrages ultérieurs, et sont également calculées à chaque instant les coordonnées des autres points de chaque élément graphique qui peuvent ensuite être traduites dans le système de coordonnées de l'écran d'affichage. La position du doigt dans les coordonnées de l'interface de détection peut être par exemple traduite dans le système de coordonnées de l'unité de commande électronique pour identifier sa position par rapport aux différents frontières, puis pour calculer au cours du temps les positions des points de centrage des éléments graphiques affichés, qui sont ensuite traduites en positions sur l'écran d'affichage.

Le doigt d'actionnement tactile peut être le doigt d'un opérateur ou peut être un élément détectable par l'interface, par exemple un objet allongé tel un stylet adapté pour permettre la détection d'un point géométrique particulier par l'interface tactile.

Par point d'impact ou point de contact on entend l'intersection de la trajectoire estimée par l'interface à un instant donné, même si le doigt ne touche pas l'écran à cet endroit à ce moment ni plus tard au cours de l'interaction avec l'interface. L'affichage de l'élément graphique translaté à un moment donné se substitue à l'affichage initial de l'élément graphique et aux autres affichages précédents, s'il y en a, de l'élément graphique.

Quand le point d'impact est détecté dans la première région, l'interface peut être configurée pour calculer un vecteur de translation entre un premier point d'ancrage appartenant au premier élément graphique non déplacé et un point de centrage temporaire du premier élément graphique déplacé, le point de centrage étant un barycentre entre le point d'ancrage et le point d'impact, et pour effectuer une translation correspondante du premier élément graphique et de la zone de sélection tactile associée, une distance relative entre le point de centrage et le point d'impact étant calculée comme une fonction croissante de la distance entre le doigt et l'écran. On entend ici par barycentre un barycentre pondéré entre deux points avec des coefficients de pondération qui peuvent être des fonctions variables, par exemple une fonction de la distance entre le doigt et l'écran.

Par point de centrage temporaire, on entend un point de l'écran sur lequel est centré l'élément graphique pendant au moins certaines phases d'interaction de l'interface avec le doigt. Le centrage s'entend ici au sens large du terme, le point de centrage pouvant être par exemple un barycentre surfacique, ou un barycentre de certains points caractéristiques de l'élément graphique, les coefficients de pondérations de ce barycentre étant constants mais pas forcément égaux d'un point caractéristique à l'autre. La représentation de l'élément graphique autour du point de centrage temporaire est alors une homothétie ou encore une dilatation bidirectionnelle de la représentation initiale de l'élément graphique autour de son point d'ancrage. Dans un mode de réalisation préféré, le point d'ancrage et le point de centrage temporaire ne sont pas apparents sur l'élément graphique affiché. Le rapport de l'homothétie ou les rapports de la dilatation sont de préférence supérieurs ou égaux à 1 dès que le point de centrage ne coïncide plus avec le point d'ancrage initial. Le point de centrage temporaire est situé entre le point d'ancrage et le point d'impact. Le point d'ancrage de l'élément graphique est un point particulier de l'écran associé à cet élément graphique, de préférence contenu à l'intérieur des frontières de l'élément graphique pour un état d'affichage de référence de l'interface. Un état d'affichage de référence correspond par exemple à l'affichage d'un menu de sélection particulier en absence d'interaction en cours avec le doigt.

Le point d'ancrage peut être typiquement un barycentre géométrique d'une surface ou d'un contour définissant les frontières visibles de l'élément graphique. Selon certaines variantes de réalisation, le point d'ancrage de l'élément graphique peut cependant être excentré par rapport à l'élément graphique, par exemple peut être déporté par rapport à un barycentre géométrique de l'élément, vers un bord de l'écran dont l'élément graphique est le plus proche, afin de limiter les risques de chevauchement entre l'élément graphique déplacé et le bord de l'écran.

De préférence, la fonction permettant de calculer la distance relative entre le point de centrage et le point d'impact s'annule quand le doigt touche l'écran, c'est-à-dire quand la distance entre le doigt et l'écran s'annule. Autrement dit, le rapport entre la distance du point de centrage au point d'impact et la distance entre le point d'ancrage et le point d'impact diminue quand le doigt approche de l'écran, et s'annule quand le doigt touche l'écran. Selon une première variante de réalisation, ce rapport, autrement dit cette distance relative d'approche ne dépend pas de la distance entre le point d'impact et le point d'ancrage. Selon une autre variante de réalisation, cette distance relative peut être décroissante avec la distance entre le point d'impact et le point d'ancrage, par exemple si l'élément graphique est de taille réduite devant la distance séparant deux éléments graphiques. Ainsi le doigt peut se retrouver positionné au dessus de l'élément graphique même quand celui ci s'est déporté à proximité de la zone d'influence d'un autre élément graphique. Selon une autre variante de réalisation, cette distance relative peut être croissante avec la distance entre le point d'impact et le point d'ancrage, par exemple si l'élément graphique est de taille comparable à la distance séparant deux éléments graphiques. On évite ainsi que l'élément graphique « déplacé » empiète outre mesure sur les zones d'influence d'éléments graphiques voisins. L'interface peut être configurée pour, quand le point d'impact franchit la portion de frontière commune de la première région vers la seconde région, afficher au moins temporairement à la fois le premier élément graphique et le second élément graphique hors de leurs positions initiales, respectivement à une première position intermédiaire et à une seconde position intermédiaire entre la position initiale de l'élément graphique et le point d'impact.

Après le franchissement de la portion de frontière commune, l'interface peut être configurée pour afficher le premier élément graphique à des positions successives le long d'une ligne rejoignant le premier point d'ancrage, qui sont séparées par des premiers intervalles dont la longueur est une première fonction croissante de la distance du point d'impact à la portion de frontière commune.

L'interface peut être configurée pour calculer les premiers intervalles à l'aide d'une première fonction qui est en outre une fonction croissante de la distance du doigt à l'écran.

L'interface peut être configurée pour, après le franchissement de la portion de frontière commune, afficher en outre le second élément graphique à des positions successives le long d'une ligne rejoignant le point d'impact, qui sont séparées par des seconds intervalles, chaque longueur de second intervalle étant calculée à partir de la longueur du premier intervalle utilisée pour l'affichage du premier élément graphique au même instant, en multipliant ce premier intervalle par un coefficient multiplicateur constant.

Le coefficient multiplicateur constant peut être inférieur au rapport entre une première distance du premier point d'ancrage à la portion de frontière commune, et une seconde distance du second point d'ancrage à la portion de frontière commune.

Le coefficient multiplicateur peut par exemple être compris entre 0,3 et 0,7 fois le rapport entre la première et la seconde distance. Par exemple si le coefficient multiplicateur est égal à 0,5 fois le rapport entre la première et la seconde distance, alors si l'utilisateur hésitant arrête son doigt juste après avoir franchi la portion de frontière commune, le premier élément graphique retourne pas à pas vers le premier élément d'ancrage, tandis que le second élément graphique se rapproche du point d'impact. Cependant, quand le premier élément graphique atteint le premier point d'ancrage, le second élément graphique ne se trouve qu'à mi chemin d'un déplacement vers le point d'impact. Si l'utilisateur reste immobile au-delà de cet instant de retour achevé du premier élément graphique, le second élément graphique peut ensuite être déplacé vers le point d'impact à une distance du second point d'ancrage qui est calculée par un vecteur de déplacement dépendant à nouveau de la distance du second point d'ancrage au point d'impact, au lieu d'être calculée de manière incrémentale. Le processus déclenché lors du franchissement de la portion de frontière commune par le point d'impact, et symétrique suivant qu'un déplacement du premier élément graphique ou qu'un déplacement du second élément graphique a été déclenché en premier.

L'interface peut être configurée pour, tant qu'un élément graphique est affiché hors de sa position initiale, afficher l'élément graphique translaté en dilatant cet élément graphique, suivant au moins une direction, d'un facteur de grossissement. La dilatation peut correspondre à une homothétie bidirectionnelle, mais peut, dans certaines variantes de réalisation, correspondre à une dilatation avec deux rapports différents selon deux axes perpendiculaires de l'écran ou encore à une dilatation unidirectionnelle. Par exemple si l'élément graphique se trouve près d'un bord d'affichage de l'écran, l'élément graphique peut être dilaté davantage, ou dilaté uniquement selon la direction perpendiculaire à ce bord, afin de retarder le moment où l'élément graphique vient chevaucher le bord de l'écran si le doigt se rapproche de ce bord. Le facteur de grossissement, c'est-à-dire le rapport de l'homothétie ou le rapport le plus élevé de la dilatation bidirectionnelle, est de préférence compris entre 1,1 et 1,5, et de préférence compris entre 1,15 et 1,35. L'élément graphique peut alternativement, ou en complément du changement de dimension, être mis en exergue par un changement de brillance, de contraste, de couleur, de motif de remplissage, d'évolution du graphisme évoquant un rapprochement ou une mise en relief de l'élément graphique.

L'interface peut être configurée pour autoriser au moins par moments une sélection par contact du doigt en un point dans la première zone de sélection tactile, alors que la première zone de sélection tactile chevauche temporairement la seconde région et que ce point se trouve dans la seconde région.

L'invention peut bien sûr être appliquée à des modes de sélection par position du doigt sur une zone d'affichage reconfigurable, même si la sélection ne se fait pas de manière tactile au sens premier du terme, : elle peut par exemple être appliquée à un menu projeté temporairement par des moyens optiques par exemple sur une surface d'un pare-brise de véhicule automobile, l'interface comprenant des moyens pour analyser la position du doigt d'actionnement par exemple à partir de saisies de caméras positionnées à proximité de la surface.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 illustre un véhicule automobile équipé d'une interface selon l'invention,
- la figure 2 illustre une interface homme-machine selon l'invention,
- la figure 3 est un graphe caractéristique d'un des modes de fonctionnement de l'interface de la figure 2, et
- la figure 4 illustre une portion de l'interface de la figure 2 pendant une sélection particulière par l'utilisateur de l'interface.

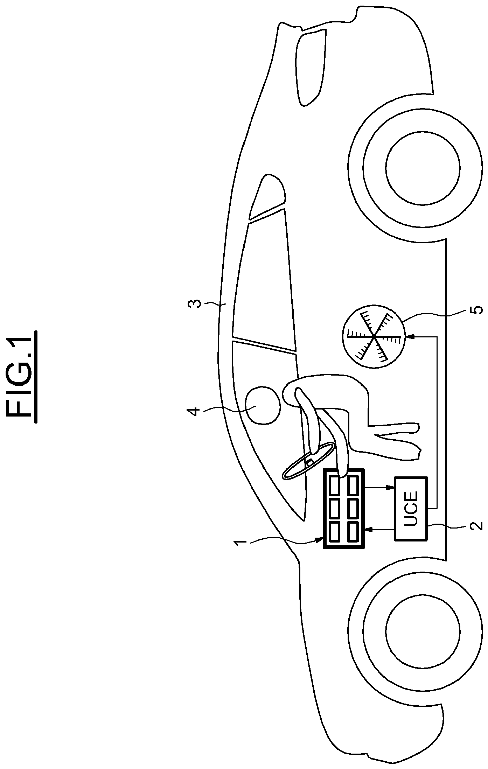

Tel qu'illustré sur la figure 1, une interface tactile 1 selon l'invention peut être par exemple embarquée à bord d'un véhicule automobile 3 piloté par un utilisateur 4 qui, en déplaçant son doigt et en touchant certains points d'un écran d'une interface tactile 1 est ainsi à même d'émettre des consignes à une unité de commande électronique 2 permettant d'actionner différents équipements du véhicule, par exemple un système d'aération 5 du véhicule ou tout autre équipement du véhicule.

L'unité de commande électronique 2 peut également renvoyer vers l'interface tactile 1 des messages traduisant l'état de fonctionnement du véhicule 3 afin que l'utilisateur 4 du véhicule puisse prendre en compte ces données.

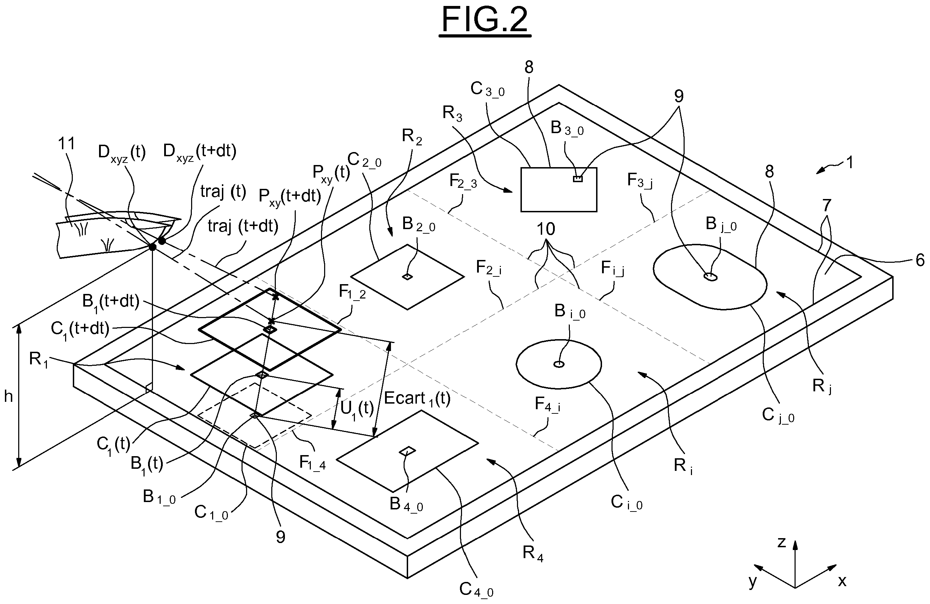

La figure 2 illustre le principe de fonctionnement d'une interface tactile 1 selon l'invention. L'interface tactile 1 comprend typiquement un écran tactile 6, délimité par des bords 7 et un système de détection (non représenté) permettant de détecter la position dans un espace tri-dimensionnel d'un doigt 11 d'un utilisateur notamment d'un point particulier $D_{xyz}$ de ce doigt, et permettant de détecter si ce doigt se trouve ou non en contact avec l'écran tactile 6. Par écran tactile on désigne ici tout système de saisie par déplacement d'un doigt et par approche de ce doigt d'une surface de validation. L'invention peut par exemple s'appliquer à des systèmes de détection projetant de manière optique des informations sur une surface inerte et observant le volume voisin de cette surface au moyen de capteurs divers optiques ou infrarouges par exemple, de manière à détecter la position d'un doigt et de manière à détecter si le doigt est ou non en contact avec la surface.

Un écran virtuel de référence, dont la représentation est ici superposée à celle de l'écran tactile 6, est délimité au moyen de frontières 10 désignées ici par $F_{1\_4}$, $F_{1\_2}$, $F_{4\_i}$, $F_{2\_i}$, $F_{2\_3}$, $F_{i\_j}$, $F_{3\_j}$ en régions ou zones d'influence, qui sont sur la figure 2 référencées $R_1$, $R_2$, $R_3$, $R_4$, $R_i$ et $R_j$. Chaque région correspond à une zone de sélection d'un menu affiché sur l'écran virtuel correspondant à l'écran tactile 6. Les régions susceptibles de donner lieu à un acte de validation affichent chacune un élément graphique désigné par la référence générale 8, et plus particulièrement référencé suivant les régions $C_{1\_0}$, $C_{2\_0}$, $C_{3\_0}$, $C_{4\_0}$, $C_{i\_0}$, $C_{j\_0}$.

Ces éléments graphiques ayant pour deuxième indice « 0 » correspondent à un affichage initial du menu sur l'écran tactile 6. Le système de détection de l'interface graphique est configuré pour détecter le mouvement du doigt 11 et en particulier d'une extrémité $D_{xyz}$ de ce doigt qui à un instant t se trouve au point $D_{xyz}(t)$ et à l'instant suivant t+dt se trouve en un point $D_{xyz}(t+dt)$.

L'unité de commande électronique 2 de l'interface graphique est apte à déterminer, par exemple par extrapolation des points successifs détectés, une trajectoire qui est réestimée à chaque instant et qui est notée traj(t) sur la figure 2 pour la trajectoire estimée à l'instant t, et qui est notée traj(t+dt) pour la trajectoire estimée à l'instant t+dt. Chacune de ces trajectoires calculées définit un point $P_{xy}$ que l'on désigne ici par point d'impact ou point de contact, bien que le contact ou l'impact reste d'abord théorique, le point de contact étant un point calculé comme étant la cible probable de l'utilisateur. Le point de contact $P_{xy}$ est en réalité l'intersection de la trajectoire et d'une surface de contact de l'écran qui peut coïncider avec la surface d'affichage de l'écran 6.

L'invention propose, lorsque le point d'impact se trouve à une distance inférieure à une distance seuil d'un des éléments graphiques $C_{1\_0}$, $C_{2\_0}$, $C_{3\_0}$, $C_{4\_0}$, $C_{i\_0}$, $C_{j\_0}$, de modifier l'affichage de l'élément graphique et de rapprocher l'élément graphique du point d'impact, afin d'aider l'utilisateur qui peut ainsi continuer à valider l'option correspondante du menu sans déporter son doigt de la trajectoire en cours. Pour ce faire, on définit arbitrairement pour chaque élément graphique à afficher, un point d'ancrage virtuel 9 dans les coordonnées de l'écran virtuel, ce point d'ancrage servant à la fois pour estimer la distance entre l'élément graphique et le point d'impact et pour calculer les déplacements ultérieurs de l'affichage de l'élément graphique.

Sur la figure 2, ces points d'ancrage 9 sont repérés respectivement par les références $B_{1\_0}$, pour l'élément graphique $C_{1\_0}$, $B_{2\_0}$ pour l'élément graphique $C_{2\_0}$, ... $B_{j\_0}$ pour l'élément graphique $C_{j\_0}$.

Ces points d'ancrage peuvent par commodité correspondre à un barycentre surfacique de l'élément graphique, ou à un barycentre d'un contour de l'élément graphique. Selon une variante de réalisation, ils peuvent éventuellement être situés de manière arbitraire près d'une des frontières de l'élément graphique.

Pour déterminer si l'affichage de l'élément graphique $C_{1\_0}$, doit être déplacé, la distance Ecarti(t), peut être comparée soit à un seuil constant, soit à un seuil qui dépend de la direction de la droite reliant le point d'ancrage $B_{1\_0}$ et le point de contact $P_{xy}(t)$. Par exemple, on peut vérifier si le point de contact se trouve à l'intérieur des frontières délimitant la région dans laquelle se trouve l'élément graphique considéré dans son état initial en l'absence d'interaction avec le doigt.

Sur la figure 2, la distance à un instant t, du point de contact $P_{xy}(t)$ de la trajectoire traj(t) calculée à cet instant t, et du point d'ancrage $B_{1\_0}$ est notée Ecarti(t). En fonction de cette distance Ecarti(t), et éventuellement en fonction de la distance du doigt à l'écran, on applique à l'élément graphique Ci o un déplacement noté ici Ui(t), qui à un instant donné correspond à un vecteur joignant le point d'ancrage $B_{1\_0}$ et un point de centrage temporaire $B_1(t)$. Le point de centrage temporaire $B_1(t)$ occupe, par rapport à l'élément graphique déplacé Ci(t), la même position barycentrique que le point d'ancrage $B_{1\_0}$ occupe initialement par rapport à l'élément graphique $C_{1\_0}$ dans sa configuration initiale d'affichage.

A un instant ultérieur t+dt, la trajectoire re-calculée définit un nouveau point d'impact $P_{xy}(t+dt)$ dont la position est utilisée conjointement avec la distance du doigt à l'écran pour calculer une nouvelle position du point de centrage Bi(t+dt) de l'élément graphique Ci(t+dt) affiché à ce moment-là.

Afin d'améliorer la perception par l'utilisateur de l'élément graphique qui est sur le point d'être sélectionné, on peut, dès que le déplacement de l'affichage de l'élément graphique est activé, accompagner ce déplacement d'une dilatation des dimensions de l'élément graphique, par exemple une homothétie suivant toutes les directions ou éventuellement, suivant l'espace disponible à l'écran, une dilatation suivant une des directions de l'écran.

La taille de l'élément graphique peut ensuite être maintenue constante tant que le déplacement de l'affichage de l'élément graphique continue d'être effectif.

Suivant la taille de l'élément graphique et l'amplitude du déplacement Ui(t), il peut arriver que l'élément graphique chevauche une des frontières entre régions. Par exemple sur la figure 2, l'élément graphique Ci(t+dt) est sur le point de chevaucher la frontière $F_{1\_2}$. A chaque élément graphique est associée une zone de sélection tactile, qui lorsqu'elle est touchée par le doigt de l'utilisateur déclenche une action correspondant à l'une des options du menu affiché sur l'écran. De préférence, la zone de sélection tactile coïncide avec la surface occupée par l'élément graphique.

L'interface selon l'invention peut être configurée de sorte que, si suite à la trajectoire traj(t) effectuée par le doigt, l'élément graphique et la zone de sélection tactile associée chevauchent une des frontières et que le doigt arrive en contact avec l'écran en un point de l'élément graphique affiché à cet instant, une validation sur la zone de sélection tactile associée est alors prise en compte, même si le point de contact se trouve à cet instant au-delà de la frontière de la région associée à l'élément graphique.

De cette manière, on facilite la saisie de l'utilisateur, puisqu'en quelque sorte la frontière effective de la région admise pour sélectionner un élément du menu se déforme dans une certaine mesure en fonction de la trajectoire du doigt de l'utilisateur, de manière à élargir la région totale de sélection admise en déplaçant temporairement ses frontières.

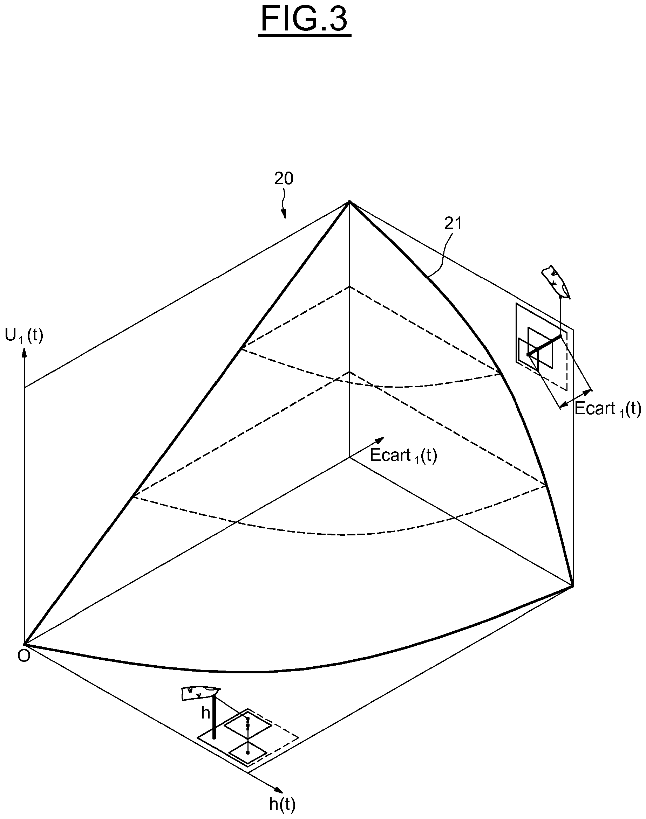

La figure 3 illustre un exemple de graphique 20 reliant l'amplitude du déplacement ici noté $U_1(t)$ d'un élément graphique sur une interface selon l'invention, en fonction d'une distance h(t) entre un doigt de l'utilisateur et l'écran, et d'une distance Ecarti(t) entre le point d'impact de la trajectoire du doigt et le point d'ancrage initial de l'élément graphique.

La surface 21 cartographiée est ici choisie pour annuler tout déplacement de l'élément graphique quand la distance du doigt à l'écran dépasse un certain seuil ho, qui peut typiquement être la distance seuil de détection de l'interface tactile. La surface 21 cartographiée est aussi choisie pour annuler tout déplacement de l'élément graphique lorsque le point d'impact se rapproche du point d'ancrage, puisqu'il n'y a plus lieu alors de déplacer l'élément graphique.

Typiquement, la valeur $U_1(t)$ de déplacement peut être choisie comme un produit entre la distance Ecarti(t) et une fonction qui est choisie comme une fonction croissante de la distance du doigt à l'écran, fonction qui s'annule pour une valeur seuil ho de distance. Une des formes de fonctions possibles pour définir le vecteur de déplacement $U_1(t)$ est de multiplier directement la distance Ecarti(t) par une fonction concave ou convexe de la distance h du doigt à l'écran. Cette fonction concave ou convexe peut être par exemple une puissance de la différence à 1, d'un rapport entre la distance h du doigt et la distance seuil ho.

Si on choisit pour cette fonction une puissance ½, on obtient l'expression proposée à l'équation (1) et correspondant au graphique de la figure 3 :

$$U_1(t) = Dist\left(B_{1\_0}, P_{xy}(t)\right) \times \sqrt{(1 - h(t)/h_0)} = Ecart_1(t) \times \sqrt{(1 - h(t)/h_0)}$$

Equation (1)

L'avantage de choisir une telle forme de fonction convexe est que l'on a un effet de « ralentissement » du déplacement de l'élément graphique quand le doigt est au voisinage immédiat de l'écran, ce qui évite de perturber l'utilisateur avant la sélection finale. On peut envisager une autre variante de fonction U(t) dans laquelle on applique également une fonction puissance à la distance Ecarti(t) entre le point d'ancrage et le point d'impact, de manière par exemple à ralentir le déplacement de l'élément graphique quand on approche des bornes de la région associée à l'élément graphique considéré. La distance du doigt à l'écran peut être prise comme une distance orthogonale h du doigt à l'écran, comme représenté sur les figures 2 et 3. Selon une variante de réalisation non représentée, la distance du doigt à l'écran est prise comme la distance entre le point $D_{xyz}$ du doigt le plus proche de l'écran et le point d'impact $P_{xy}(t)$ de la trajectoire à cet instant.

Selon une autre variante, on peut définir une distance relative entre le point de centrage $B_1(t)$ de l'élément graphique, et le point d'impact $P_{xy}(t)$ comme un rapport de distance $\Delta_1(t)$, défini comme :

$$\Delta_1(t) = \frac{Ecart_1(t) - U_1(t)}{Ecart_1(t)}$$

Equation (2).

Cette distance relative donne l'écart restant à parcourir à l'élément graphique pour que cet élément graphique se retrouve centré sur le point d'impact.

Cette distance relative diminue quand le doigt approche de l'écran et s'annule quand le doigt touche l'écran.

Lorsque l'élément graphique vient à chevaucher la frontière d'une des régions, deux hypothèses sont à envisager. Dans un premier cas, la validation et l'élément de menu correspondant à l'élément graphique, se produit alors que l'élément graphique affiché déplacé se trouve encore entièrement dans la région qui lui est associée. L'interface bascule alors généralement vers un nouvel écran d'affichage pour confirmer la sélection, ou pour proposer un autre menu.

Il est également possible que le doigt de l'utilisateur continue à se diriger vers la région frontalière, soit à cause des aléas de mouvements du véhicule, soit parce que, en raison d'une sélection insuffisamment précise, c'est l'élément graphique situé de l'autre côté de la région frontalière que l'utilisateur veut en fait actionner. L'invention propose alors une démarche d'affichage de transition permettant d'indiquer à l'utilisateur qu'il se trouve dans une zone frontière entre deux validations et pour lui permettre de visualiser immédiatement quel est l'élément graphique qui est en voie d'être abandonné pour la sélection, et quel est l'élément graphique qui est en cours de mise en avant eu égard à la trajectoire du doigt de l'utilisateur.

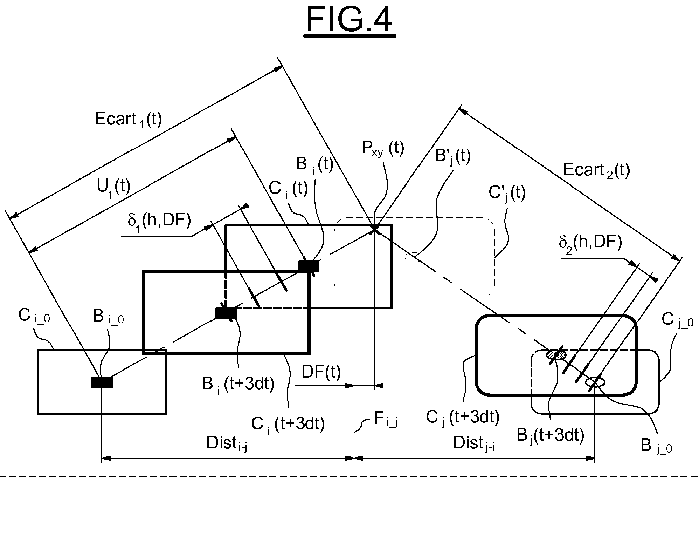

La figure 4 illustre un exemple particulier dans lequel l'utilisateur a initialement enclenché le déplacement de l'affichage d'un élément graphique Ci qui s'est rapproché d'une frontière $F_{i\_j}$ entre une région i et une région j de l'écran 6 de l'interface 1 illustrée en figure 2. Suite au déplacement effectué par le doigt de l'utilisateur, le point d'impact $P_{xy}(t)$ qui se trouvait initialement dans la région i, est passé dans la région j, et se trouve à une distance notée ici DF(t) à la frontière $F_{i\_j}$ entre les deux régions.

Le point d'impact $P_{xy}(t)$ se trouve à une distance notée ici Ecart$_i$(t) du point d'ancrage $B_{i\_0}$ de l'élément graphique Ci de la région i et se trouve à une distance Ecart$_2$(t) du point d'ancrage $B_{j\_0}$ de l'élément graphique Cj associé à la région j.

A l'instant t, l'élément graphique $C_i(t)$ chevauche déjà la frontière $F_{i\_j}$ et l'élément graphique Cj est toujours à sa configuration initiale $C_{j\_0}$, car le point d'impact théorique du doigt vient tout juste de franchir la frontière $F_{i\_j}$. Une fois que le franchissement de la frontière a été détecté par l'interface 1, celle-ci active un déplacement progressif et simultané des deux éléments graphiques des régions Ri et $R_j$ de manière à ramener l'élément graphique de la région Ri à sa position initiale -en l'absence d'interaction-, et à commencer à déplacer l'élément graphique de la région $R_j$ en direction du point d'impact $P_{xy}(t)$. Dans les instants qui suivent, l'élément graphique Ci est à chaque fois déplacé le long de la ligne qui relie l'élément d'impact $P_{xy}$ et le point d'ancrage $B_{i\_0}$, d'un premier intervalle $\delta_1$ qui est fonction de la distance h du doigt à l'écran et est fonction de la distance DF du point d'impact $P_{xy}(t)$ à la frontière $F_{i\_j}$. Dans le même temps, l'élément graphique $C_j$ est déplacé le long de la ligne qui relie le point d'ancrage $B_{j\_0}$ au point d'impact $P_{xy}$, d'un deuxième intervalle $\delta_2$, qui est également fonction de la distance h du doigt à l'écran et de la distance DF entre le point d'impact et la frontière commune.

Les valeurs des intervalles $\delta_1$ et $\delta_2$ sont choisies de manière à ce que, si l'utilisateur hésitant garde son doigt figé dans la position $P_{xy}$ détectée après le franchissement de la frontière, alors l'élément graphique Ci revient à sa position initiale, et l'élément graphique Cj a parcouru dans le même temps une portion de la distance qui le sépare du point d'impact. L'utilisateur voit alors que l'élément graphique Cj est sélectionné en vue de son activation puisqu'il a amorcé son déplacement.

Pour obtenir cet effet, on peut par exemple calculer les valeurs des intervalles $\delta_1$ comme des valeurs proportionnelles à une première fonction de la distance du doigt à l'écran. Cette première fonction s'annule pour le seuil de détection de l'écran, et est croissante en fonction de la distance du doigt à l'écran. Dans un mode de réalisation, on peut introduire en outre un rapport constant entre le premier intervalle $\delta_1$ -déplacement de l'élément graphique en cours de désélection- et le second intervalle $\delta_2$ -déplacement de l'élément graphique en cours de présélection-. Ce rapport peut être par exemple fonction des distances entre les points d'ancrage respectifs des éléments graphiques et le point d'impact autrement dit un rapport qui est égal au rapport entre les distances des points d'ancrage respectifs et la frontière commune $F_{i\_j}$.

Ainsi, on note Dist$_{i\_j}$ la distance du point d'ancrage du premier élément graphique à la frontière commune, et Dist$_{j\_i}$ la distance du point d'ancrage du second élément graphique à la frontière commune, on peut utiliser des expressions du type :

$$\delta_1(h, DF) = \delta i(h, DF) = K\frac{DF(t)}{Dist_{i\_j}} \times \sqrt{(1 - h(t)/h_0)}$$

Equation (3)

$$\delta_2(h, DF) = \delta j(h, DF) = k\frac{DF(t)}{Dist_{j-i}} \times \sqrt{(1 - h(t)/h_0)}$$

Equation (4)

Avec de préférence :
$$\frac{k}{K} \leq 1$$

Les valeurs k et K sont des coefficients constants, qui sont choisis de manière que le rapport k/K soit inférieur à 1, par exemple égal à ½. De cette manière, lorsque le premier élément graphique Ci sera revenu à sa position initiale $C_{i\_0}$, le second élément graphique Cj se trouvera à mi chemin entre sa position initiale $C_{j\_0}$ et le point d'impact $P_{xy}$.

Dans l'exemple illustré en figure 4, on a représenté les positions des éléments graphiques Ci et $C_j$, et leurs déplacements sur trois intervalles de temps d'amplitude dt, après un instant t où la frontière a été franchie par le point d'impact $P_{xy}$. On voit ainsi que l'élément graphique $C_i(t+3dt)$ a effectué trois pas en arrière, de valeur $\delta_1$ en direction de sa position initiale, alors que l'élément graphique Cj a effectué trois pas en avant d'amplitude $\delta_2$ en direction du point d'impact $P_{xy}$. L'amplitude du pas $\delta_1$ est supérieure à l'amplitude du pas $\delta_2$ car les distances à la frontière commune $F_{i\_j}$ des points d'ancrage $B_{i\_0}$ et $B_{j\_0}$ sont comparables.

A titre d'illustration d'un autre mode de réalisation, la figure 4 montre également une position d'élément graphique C'j(t) qui pourrait correspondre à la position de l'élément graphique Cj si une procédure particulière n'était pas prévue lors du franchissement de la frontière $F_{i\_j}$. Cette position théorique est calculée suivant le même schéma que pour la position affichée de l'élément graphique Ci de l'autre côté de la frontière. En l'absence de procédure d'affichage transitoire lors des franchissements de frontière, les deux éléments se retrouveraient tous deux très proches du même point $P_{xy}$, ce qui pourrait induire une confusion dans la perception de l'utilisateur, qui aurait des difficultés à savoir quel est l'élément graphique préalablement sélectionné et celui qui vient tout juste d'être activé. La procédure d'effacement progressif de l'élément activé selon l'invention permet d'améliorer la perception de la chronologie des éléments sélectionnés par l'utilisateur.

Par convention, on mesure la distance entre le point d'impact et l'élément graphique, comme la distance entre le point d'impact et un point de centrage obtenu en appliquant au point de centrage initial, le vecteur de translation de l'élément graphique.

La relation entre la proximité du doigt à l'écran et la proximité entre le point d'impact et l'équivalent déplacé du point d'ancrage n'est pas forcément linéaire.

L'invention ne se limite pas aux exemples de réalisation décrits et peut se décliner en de nombreuses variantes. La position du doigt par rapport à l'interface peut être détectée par tout moyen tactile ou tout moyen de sélection par positionnement de l'extrémité d'un doigt. Les fonctions permettant de calculer le déplacement d'un élément graphique peuvent différer de celles citées dans les exemples. Des temporisations peuvent être introduites à certaines étapes du processus d'affichage modifié du ou des éléments graphiques. Des modes d'affichage en transparence d'un élément graphique par rapport à un autre peuvent être prévus si deux éléments graphiques doivent être affichés sur des zones s'interceptant.

**Revendications**

1. Interface tactile (1) comportant un écran d'affichage (6), l'interface tactile étant apte à détecter l'approche et la position d'un doigt (11) d'un utilisateur par rapport à l' écran d'affichage, , l'écran d'affichage étant délimité au moyen de frontières (10, $F_{1\_4}$, $F_{1\_2}$, $F_{2\_i}$, $F_{2\_3}$, $F_{4\_i}$, $F_{i\_j}$, $F_{3\_j}$) en régions (R1, R2, R3, R4, Ri et Rj), l'interface tactile étant configurée pour afficher sur l'écran d'affichage au moins un premier élément graphique ($C_{i\_0}$) associé à une première zone de sélection tactile entourant un premier point d'ancrage (Bi_0) de l'élément graphique sur l'écran d'affichage, et se trouvant à l'intérieur d'une même première région (Ri) , et pour afficher au moins un second élément graphique ($C_{j\_0}$) associé à une seconde zone de sélection tactile, entourant un second point d'ancrage (Bj_0) de l'élément graphique sur l'écran d'affichage, et se trouvant à l'intérieur d'une même seconde région ( Rj) de l'écran distincte de la première région, la première région (Ri) étant délimitée par une première frontière et la seconde région ( Rj) étant délimitée par une seconde frontière présentant une portion frontière commune ($F_{i\_j}$) avec la première frontière, **caractérisé en ce que** l'interface tactile est configurée pour estimer de manière répétée une trajectoire (traj(t)) d'un point du doigt et un point d'impact ($P_{xy}(t)$) de cette trajectoire sur l'écran d'affichage, et étant configurée pour, quand le point d'impact ($P_{xy}(t)$) entre dans la première région (Ri), déplacer l'élément graphique ($C_i(t)$) affiché de cette première région et la zone de sélection tactile associée en direction du point d'impact ($P_{xy}(t)$), puis, si le point d'impact franchit la portion ($F_{i\_j}$) de frontière commune entre la première région (Ri) et la seconde région ( Rj), ramener incrémentalement, l'affichage du premier élément graphique (Ci(t)) vers le premier point d'ancrage (Bi_0), pendant que le second élément graphique (Cj(t)) est rapproché incrémentalement vers le point d'impact (Pxy(t)).

2. Interface tactile selon la revendication 1, configurée pour, quand le point d'impact ($P_{xy}(t)$) pénètre dans la première région (Ri), calculer un vecteur de translation ($U_1(t)$) entre un premier point d'ancrage ($B_{i\_0}$) appartenant au premier élément graphique ($C_{i\_0}$) non déplacé et un point de centrage temporaire ($B_i(t)$) du premier élément graphique déplacé ($C_i(t)$), le point de centrage ($B_i(t)$) formant un barycentre entre le point d'ancrage ($B_{i\_0}$) et le point d'impact ($P_{xy}(t)$), et pour effectuer une translation correspondante du premier élément graphique ($C_i(t)$) et de la zone de sélection tactile associée, une distance relative ($\Delta_1(t)$) entre le point de centrage et le point d'impact étant calculée comme une fonction croissante de la distance (h) entre le doigt (11) et l'écran d'affichage (6).

3. Interface tactile selon la revendication 1 ou 2 précédentes, l'interface tactile étant configurée pour, quand le point d'impact ($P_{xy}(t)$) franchit la portion frontière commune de la première région (Ri) vers la seconde région ( Rj), afficher au moins temporairement à la fois le premier élément graphique ($C_i(t+3dt)$) et le second élément graphique (Cj(t+3dt)) hors de leurs positions initiales, respectivement à une première position intermédiaire et à une seconde position intermédiaire entre la position initiale de l'élément graphique ($B_{i\_0}$, $B_{j\_0}$) et le point d'impact.

4. Interface tactile selon la revendication 3, configurée pour, après le franchissement de la portion de frontière commune ($F_{i\_j}$), afficher le premier élément graphique à des positions successives le long d'une ligne rejoignant le premier point d'ancrage, qui sont séparées par des premiers intervalles ($\delta_1$) dont la longueur est une première fonction croissante de la distance (DF(t)) du point d'impact à la portion de frontière commune ($F_{i\_j}$).

5. Interface tactile selon la revendication 4, configurée pour calculer les premiers intervalles ($\delta_1$) à l'aide d'une première fonction qui est en outre une fonction croissante de la distance (h) du doigt à l'écran (6).

6. Interface tactile selon la revendication 5, configurée pour, après le franchissement de la portion de frontière commune ($F_{i\_j}$), afficher en outre le second élément graphique ($C_j(t)$) à des positions successives le long d'une ligne rejoignant le point d'impact, qui sont séparées par des seconds intervalles ($\delta_2$), chaque longueur de second intervalle étant calculée à partir de la longueur ($\delta_1$) du premier intervalle utilisée pour l'affichage du premier élément graphique au même instant, en multipliant ce premier intervalle par un coefficient multiplicateur constant.

7. Interface tactile selon la revendication 6, dans lequel le coefficient multiplicateur constant est inférieur au rapport entre une première distance ($Dist_{i\_j}$) du premier point d'ancrage à la portion de frontière commune, et une seconde distance ($Dist_{j\_i}$) du second point d'ancrage à la portion de frontière commune ($F_{i\_j}$).

8. Interface tactile selon l'une des revendications 1 à 7, configurée, tant qu'un élément graphique est affiché hors de sa position initiale, pour afficher l'élément graphique translaté en dilatant cet élément graphique, suivant au moins une direction, d'un facteur de grossissement.

9. Interface tactile selon l'une des revendications 1 à 8, configurée pour autoriser au moins par moments une sélection par contact du doigt (11) en un point se trouvant dans la première zone de sélection tactile, alors que la première zone de sélection tactile chevauche temporairement la seconde région ( Rj) et que ce point se trouve dans la seconde région ( Rj).

10. Procédé de gestion d'une interface (1) tactile apte à détecter l'approche et la position d'un doigt (11) d'un utilisateur par rapport à un écran d'affichage (6) de l'interface tactile, l'écran d'affichage étant délimité au moyen de frontières (10, F1_4, F1_2, F2_i, F2_3, F4_i, Fi_j, F3_j) en régions (R1, R2, R3, R4, Ri et Rj), procédé dans lequel l'interface tactile

- affiche à une première étape sur l'écran au moins un premier élément graphique ($C_{i\_0}$) associé à une première zone de sélection tactile, entourant un premier point d'ancrage ($B_{i\_0}$) de l'élément graphique sur l'écran, et se trouvant à l'intérieur d'une même première région (Ri);
- affiche à cette première étape sur l'écran au moins un second élément graphique ($C_{j\_0}$) associé à une seconde zone de sélection tactile, entourant un second point d'ancrage ($B_{j\_0}$) de l'élément graphique sur l'écran d'affichage, et se trouvant à l'intérieur d'une même seconde région ( Rj), distincte de la première région ;
la première région (Ri) étant délimitée par une première frontière et la seconde région (Rj) étant délimitée par une seconde frontière présentant une portion de frontière commune ($F_{i\_j}$) avec la première frontière, Et **caractérisé en ce que** l'interface tactile
- estime de manière répétée une trajectoire (traj(t)) d'un point du doigt et un point d'impact ($P_{xy}(t)$) de cette trajectoire sur l'écran d'affichage;
- quand le point d'impact entre dans la première région (Ri, R2, R3, R4, Ri et Rj), déplace l'élément graphique ($C_i(t)$) affiché de cette première région (Ri) et la zone de sélection tactile associée en direction du point d'impact ($P_{xy}(t)$); et
- si le point d'impact ($P_{xy}(t)$) franchit la portion ($F_{i\_j}$) de frontière commune entre la première région (Ri) et la seconde région (Rj), ramène incrémentalement, l'affichage du premier élément graphique ($C_i(t)$) vers le premier point d'ancrage ($B_{i\_0}$), pendant que le second élément graphique ($C_j(t)$) est rapproché incrémentalement vers le point d'impact ($P_{xy}(t)$).

**Patentansprüche**

1. Berührungsschnittstelle (1), die einen Anzeigebildschirm (6) aufweist, wobei die Berührungsschnittstelle fähig ist, die Annäherung und die Position eines Fingers (11) eines Benutzers bezüglich des Anzeigebildschirms zu erfassen, wobei der Anzeigebildschirm mittels Grenzen (10, $F_{1\_4}$, $F_{1\_2}$, $F_{2\_i}$, $F_{2\_3}$, $F_{4\_i}$, $F_{i\_j}$, $F_{3\_j}$) in Bereiche ($R_1$, $R_2$, $R_3$, $R_4$, $R_i$ und $R_j$) eingegrenzt wird, wobei die Berührungsschnittstelle konfiguriert ist, auf dem Anzeigebildschirm mindestens ein erstes grafisches Element ($C_{i\_0}$) anzuzeigen, das einer ersten Berührungsauswahlzone zugeordnet ist, die einen ersten Ankerpunkt ($B_{i\_0}$) des grafischen Elements auf dem Anzeigebildschirm umgibt, und sich innerhalb eines gleichen ersten Bereichs ($R_i$) befindet, und um mindestens ein zweites grafisches Element ($C_{j\_0}$) anzuzeigen, das einer zweiten Berührungsauswahlzone zugeordnet ist, die einen zweiten Ankerpunkt ($B_{j\_0}$) des grafischen Elements auf dem Anzeigebildschirm umgibt, und sich innerhalb eines gleichen zweiten Bereichs ($R_j$) des Bildschirms befindet, der sich vom ersten Bereich unterscheidet, wobei der erste Bereich ($R_i$) durch eine erste Grenze eingegrenzt wird und der zweite Bereich ($R_j$) durch eine zweite Grenze eingegrenzt wird, die einen gemeinsamen Grenzabschnitt ($F_{i\_j}$) mit der ersten Grenze aufweist, **dadurch gekennzeichnet, dass** die Berührungsschnittstelle konfiguriert ist, wiederholt einen ersten Weg (traj(t)) eines Punkts des Fingers und einen Auftreffpunkt ($P_{xy}(t)$) dieses Wegs auf dem Anzeigebildschirm zu schätzen, und konfiguriert ist, wenn der Auftreffpunkt ($P_{xy}(t)$) in den ersten Bereich ($R_i$) eintritt, das angezeigte grafische Element ($C_i(t)$) dieses ersten Bereichs und die zugeordnete Berührungsauswahlzone in Richtung des Auftreffpunkts ($P_{xy}(t)$) zu verschieben, dann, wenn der Auftreffpunkt den gemeinsamen Grenzabschnitt ($F_{i\_j}$) zwischen dem ersten Bereich ($R_i$) und dem zweiten Bereich ($R_j$) überschreitet, inkrementell die Anzeige des ersten grafischen Elements ($C_i(t)$) zum ersten Ankerpunkt ($B_{i\_0}$) zurückzuführen, während das zweite grafische Element ($C_j(t)$) inkrementell dem Auftreffpunkt ($P_{xy}(t)$) angenähert wird.

2. Berührungsschnittstelle nach Anspruch 1, die konfiguriert ist, wenn der Auftreffpunkt ($P_{xy}(t)$) in den ersten Bereich ($R_i$) eindringt, einen Translationsvektor ($U_1(t)$) zwischen einem ersten Ankerpunkt ($B_{i\_0}$), der zum nicht verschobenen ersten grafischen Element ($C_{i\_0}$) gehört, und einem temporären Zentrierpunkt ($B_i(t)$) des verschobenen ersten grafischen Elements ($C_i(t)$) zu berechnen, wobei der Zentrierpunkt ($B_i(t)$) einen Schwerpunkt zwischen dem Ankerpunkt ($B_{i\_0}$) und dem Auftreffpunkt ($P_{xy}(t)$) bildet, und eine entsprechende Translation des ersten grafischen Elements ($C_i(t)$) und der zugeordneten Berührungsauswahlzone auszuführen, wobei ein relativer Abstand ($\Delta_1(t)$) zwischen dem Zentrierpunkt und dem Auftreffpunkt als eine zunehmende Funktion des Abstands (h) zwischen dem Finger (11) und dem Anzeigebildschirm (6) berechnet wird.

3. Berührungsschnittstelle nach den vorhergehenden Ansprüchen 1 oder 2, wobei die Berührungsschnittstelle konfiguriert ist, wenn der Auftreffpunkt ($P_{xy}(t)$) den gemeinsamen Grenzabschnitt des ersten Bereichs ($R_i$) zum zweiten Bereich ($R_j$) überschreitet, zumindest temporär gleichzeitig das erste grafische Element ($C_i(t+3dt)$) und das zweite grafische Element ($C_j(t+3dt)$) außerhalb ihrer Anfangspositionen anzuzeigen, jeweils in einer ersten Zwischenposition und in einer zweiten Zwischenposition zwischen der Anfangsposition des grafischen Elements ($B_{i\_0}$, $B_{j\_0}$) und dem Auftreffpunkt.

4. Berührungsschnittstelle nach Anspruch 3, die konfiguriert ist, nach dem Überschreiten des gemeinsamen Grenzabschnitts ($F_{i\_j}$) das erste grafische Element in aufeinanderfolgenden Positionen entlang einer zum ersten Ankerpunkt gehenden Linie anzuzeigen, die durch erste Zwischenräume ($\delta_1$) getrennt sind, deren Länge eine erste zunehmende Funktion des Abstands (DF(t)) des Auftreffpunkts zum gemeinsamen Grenzabschnitt ($F_{i\_j}$) ist.

5. Berührungsschnittstelle nach Anspruch 4, die konfiguriert ist, die ersten Zwischenräume ($\delta_1$) mit Hilfe einer ersten Funktion zu berechnen, die außerdem eine zunehmende Funktion des Abstands (h) des Fingers zum Bildschirm (6) ist.

6. Berührungsschnittstelle nach Anspruch 5, die konfiguriert ist, nach dem Überschreiten des gemeinsamen Grenzabschnitts ($F_{i\_j}$) außerdem das zweite grafische Element ($C_j(t)$) in aufeinanderfolgenden Positionen entlang einer zum Auftreffpunkt gehenden Linie anzuzeigen, die durch zweite Zwischenräume ($\delta_2$) getrennt sind, wobei jede Länge eines zweiten Zwischenraums ausgehend von der Länge ($\delta_1$) des ersten Zwischenraums berechnet wird, die für die Anzeige des ersten grafischen Elements zum gleichen Zeitpunkt verwendet wird, indem dieser erste Zwischenraum mit einem konstanten Multiplikationskoeffizient multipliziert wird.

7. Berührungsschnittstelle nach Anspruch 6, wobei der konstante Multiplikationskoeffizient geringer ist als das Verhältnis zwischen einem ersten Abstand ($Dist_{i\_j}$) des ersten Ankerpunkts zum gemeinsamen Grenzabschnitt und einem zweiten Abstand ($Dist_{j\_i}$) des zweiten Ankerpunkts zum gemeinsamen Grenzabschnitt ($F_{i\_j}$).

8. Berührungsschnittstelle nach einem der Ansprüche 1 bis 7, die konfiguriert ist, so lange ein grafisches Element außerhalb seiner Anfangsposition angezeigt wird, das translationsverschobene grafische Element anzuzeigen, indem dieses grafische Element gemäß mindestens einer Richtung um einen Vergrößerungsfaktor ausgedehnt wird.

**9.** Berührungsschnittstelle nach einem der Ansprüche 1 bis 8, die konfiguriert ist, zumindest zeitweise eine Auswahl durch Kontakt des Fingers (11) an einem Punkt zu erlauben, der sich in der ersten Berührungsauswahlzone befindet, während die erste Berührungsauswahlzone temporär den zweiten Bereich ($R_j$) überlappt und dieser Punkt sich im zweiten Bereich ($R_j$) befindet.

**10.** Verfahren zur Verwaltung einer Berührungsschnittstelle (1), die fähig ist, die Annäherung und die Position eines Fingers (11) eines Benutzers bezüglich eines Anzeigebildschirms (6) der Berührungsschnittstelle zu erfassen, wobei der Anzeigebildschirm mittels Grenzen (10, $F_{1\_4}$, $F_{1\_2}$, $F_{2\_i}$, $F_{2\_3}$, $F_{4\_i}$, $F_{i\_j}$, $F_{3\_j}$) in Bereiche ($R_1$, $R_2$, $R_3$, $R_4$, $R_i$ und $R_j$) eingegrenzt ist, Verfahren, bei dem die Berührungsschnittstelle

- in einem ersten Schritt mindestens ein erstes grafisches Element ($C_{i\_0}$) auf dem Bildschirm anzeigt, das einer ersten Berührungsauswahlzone zugeordnet ist, die einen ersten Ankerpunkt ($B_{i\_0}$) des grafischen Elements auf dem Bildschirm umgibt, und sich im Inneren eines gleichen ersten Bereichs ($\overline{R}_i$) befindet,
- in diesem ersten Schritt mindestens ein zweites grafisches Element ($C_{j\_0}$) auf dem Bildschirm anzeigt, das einer zweiten Berührungsauswahlzone zugeordnet ist, die einen zweiten Ankerpunkt ($B_{j\_0}$) des grafischen Elements auf dem Anzeigebildschirm umgibt, und sich im Inneren eines gleichen zweiten Bereichs ($R_j$) anders als der erste Bereich befindet, wobei der erste Bereich ($R_i$) durch eine erste Grenze eingegrenzt wird und der zweite Bereich ($R_j$) durch eine zweite Grenze eingegrenzt wird, die einen gemeinsamen Grenzabschnitt ($F_{i\_j}$) mit der ersten Grenze aufweist, und **dadurch gekennzeichnet, dass** die Berührungsschnittstelle
- wiederholt einen ersten Weg (traj(t)) eines Punkts des Fingers und einen Auftreffpunkt ($P_{xy}(t)$) dieses Wegs auf dem Anzeigebildschirm schätzt,
- wenn der Auftreffpunkt in den ersten Bereich ($R_i$, $R_2$, $R_3$, $R_4$, $R_i$ und $R_j$) eintritt, das angezeigte grafische Element ($C_i(t)$) dieses ersten Bereichs ($R_i$) und die zugeordnete Berührungsauswahlzone in Richtung des Auftreffpunkts ($P_{xy}(t)$) verschiebt, und
- wenn der Auftreffpunkt den gemeinsamen Grenzabschnitt ($F_{i\_j}$) zwischen dem ersten Bereich ($R_i$) und dem zweiten Bereich ($R_j$) überschreitet, inkrementell die Anzeige des ersten grafischen Elements ($C_i(t)$) zum ersten Ankerpunkt ($B_{i\_0}$) zurückführt, während das zweite grafische Element ($C_j(t)$) inkrementell dem Auftreffpunkt ($P_{xy}(t)$) angenähert wird.

## Claims

**1.** Touch interface (1) comprising a display screen (6), the touch interface being able to detect the approach and the position of a user's finger (11) with respect to the display screen, the display screen being delimited by means of boundaries (10, $F_{1\_4}$, $F_{1\_2}$, $F_{2\_i}$, $F_{2\_3}$, $F_{4\_i}$, $F_{i\_j}$, $F_{3\_j}$) into regions (R1, R2, R3, R4, Ri and Rj), the touch interface being configured to display, on the display screen, at least a first graphical element ($C_{i\_0}$) associated with a first touch-selection zone surrounding a first anchoring point (Bi_0) of the graphical element on the display screen, and located inside the same first region (Ri), and to display at least a second graphical element ($C_{j\_0}$) associated with a second touch-selection zone, surrounding a second anchoring point (Bj_0) of the graphical element on the display screen, and located inside the same second region (Rj) of the screen, which is distinct from the first region, the first region (Ri) being delimited by a first boundary and the second region (Rj) being delimited by a second boundary having a common boundary portion (Fi_j) with the first boundary, **characterized in that** the touch interface is configured to repeatedly estimate a trajectory (traj(t)) of a point of the finger and an impact point ($P_{xy}(t)$) of this trajectory on the display screen, and configured to, when the impact point ($P_{xy}(t)$) enters the first region (Ri), move the displayed graphical element ($C_i(t)$) of this first region and the associated touch-selection zone in the direction of the impact point ($P_{xy}(t)$), then, if the impact point crosses the common boundary portion (Fi_j) between the first region (Ri) and the second region (Rj), incrementally bring back the display of the first graphical element (Ci(t)) to the first anchoring point (Bi_0), while the second graphical element (Cj(t)) is incrementally brought closer to the impact point ($P_{xy}(t)$).

**2.** Touch interface according to Claim 1, configured to, when the impact point ($P_{xy}(t)$) penetrates the first region (Ri), calculate a translation vector ($U_1(t)$) between a first anchoring point ($B_{i\_0}$) belonging to the unmoved first graphical element ($C_{i\_0}$) and a temporary centring point ($B_i(t)$) of the moved first graphical element ($C_i(t)$), the centring point ($B_i(t)$) forming a barycentre between the anchoring point ($B_{i\_0}$) and the impact point ($P_{xy}(t)$), and to perform a corresponding translation of the first graphical element ($C_i(t)$) and of the associated touch-selection zone, a relative distance ($\Delta_1(t)$) between the centring point and the impact point being calculated as an increasing function of the distance (h) between the finger (11) and the display screen (6).

**3.** Touch interface according to the preceding Claim 1 or 2, the touch interface being configured to, when the impact point ($P_{xy}(t)$) crosses the common boundary portion from the first region ($R_i$) to the second region ($R_j$), at least temporarily display both the first graphical element ($C_i(t+3dt)$) and the second graphical element ($C_j(t+3dt)$) outside their initial positions, in a first intermediate position and in a second intermediate position, respectively, between the initial position of the graphical element ($B_{i\_0}$, $B_{j\_0}$) and the impact point.

**4.** Touch interface according to Claim 3, configured to, after the common boundary portion ($F_{i\_j}$) is crossed, display the first graphical element in successive positions along a line meeting the first anchoring point, which are separated by first intervals ($\delta_1$), the length of which is an increasing first function of the distance ($DF(t)$) from the impact point to the common boundary portion ($Fi\_j$).

**5.** Touch interface according to Claim 4, configured to calculate the first intervals ($\delta_1$) using a first function which is, furthermore, an increasing function of the distance ($h$) from the finger to the screen (6).

**6.** Touch interface according to Claim 5, configured to, after the common boundary portion ($F_{i\_j}$) is crossed, furthermore display the second graphical element ($C_j(t)$) in successive positions along a line meeting the impact point, which are separated by second intervals ($\delta_2$), each second-interval length being calculated from the length ($\delta_1$) of the first interval, used for the display of the first graphical element at the same instant, by multiplying this first interval by a constant multiplying coefficient.

**7.** Touch interface according to Claim 6, wherein the constant multiplying coefficient is less than the ratio between a first distance ($Dist_{i\_j}$) from the first anchoring point to the common boundary portion and a second distance ($Dist_{j\_i}$) from the second anchoring point to the common boundary portion ($F_{i\_j}$).

**8.** Touch interface according to one of Claims 1 to 7, configured, as long as a graphical element is displayed outside its initial position, to display the translated graphical element while dilating this graphical element, in at least one direction, by an enlargement factor.

**9.** Touch interface according to one of Claims 1 to 8, configured to allow, at least at times, selection by contact of the finger (11) at a point located in the first touch-selection zone, while the first touch-selection zone temporarily overlaps the second region ($R_j$) and this point is located in the second region ($R_j$).

**10.** Method for managing a touch interface (1) which is able to detect the approach and the position of a user's finger (11) with respect to a display screen (6) of the touch interface, the display screen being delimited by means of boundaries (10, F1\_4, F1\_2, F2\_i, F2\_3, F4\_i, Fi\_j, F3\_j) into regions (R1, R2, R3, R4, Ri and Rj), in which method the touch interface

- in a first step displays, on the screen, at least a first graphical element ($C_{i\_0}$) associated with a first touch-selection zone, surrounding a first anchoring point ($B_{i\_0}$) of the graphical element on the screen, and located inside the same first region ($R_i$);
- in this first step displays, on the screen, at least a second graphical element ($C_{j\_0}$) associated with a second touch-selection zone, surrounding a second anchoring point ($B_{j\_0}$) of the graphical element on the display screen, and located inside the same second region ($R_j$), which is distinct from the first region;
the first region ($R_i$) being delimited by a first boundary and the second region ($R_j$) being delimited by a second boundary having a common boundary portion ($Fi\_j$) with the first boundary, and **characterized in that** the touch interface
- repeatedly estimates a trajectory ($traj(t)$) of a point of the finger and an impact point ($P_{xy}(t)$) of this trajectory on the display screen;
- when the impact point enters the first region (Ri, R2, R3, R4, Ri and Rj), moves the displayed graphical element ($C_i(t)$) of this first region ($R_i$) and the associated touch-selection zone in the direction of the impact point ($P_{xy}(t)$) ; and
- if the impact point ($P_{xy}(t)$) crosses the common boundary portion ($F_{i\_j}$) between the first region ($R_i$) and the second region ($R_j$), incrementally brings back the display of the first graphical element ($C_i(t)$) to the first anchoring point ($B_{i\_0}$), while the second graphical element ($C_j(t)$) is incrementally brought closer to the impact point ($P_{xy}(t)$) .

## FIG.1

EP 3 221 780 B1

FIG.2

# FIG.3

20

21

$U_1(t)$

$Ecart_1(t)$

$Ecart_1(t)$

O

h

h(t)

# FIG.4

EP 3 221 780 B1

**EP 3 221 780 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009201246 A1
- US 2011157040 A1
- US 2012120002 A1
- US 20112285665 A1
- FR 3002052 A1
- EP 2105826 A2
- US 2014028557 A1